# EUROPEAN PATENT APPLICATION

(11) **EP 0 974 813 A1**
(43) Date of publication of application: **26.01.2000**
(21) Application number: 98305829.8
(22) Date of filing: 22.07.1998
(51) Int. Cl.: G01F 1/46

(54) **Flowmeter**

(71) Applicant: Meggitt Mobrey Limited, Slough, Berkshire SL1 4DN (GB)
(72) Inventor: Campbell, David Malcolm, Lewes, East Sussex BN7 2HF (GB)
(74) Representative: Skone James, Robert Edmund

(57) **Abstract**

A method of forming an averaging pressure pitot flowmeter 5 is described, as is a flowmeter 5 formed by the method. The method involves selecting or forming a solid elongate body 6 having longitudinally extending, spaced, edges 7a, 7b to define the flow separating edges of the flowmeter. Channels 8a, 8b are formed on opposite sides of a straight line joining the edges 7a, 7b , into which channels are fixed tubes 9a, 9b in order to provide the high and low pressure plenums of the flowmeter 5.

## Description

### Field of the Invention

This invention relates to a flowmeter and, in particular, to an averaging pressure pitot tube type flowmeter.

### Background

Averaging pressure pitot flowmeters are well known. Commonly such instruments include an elongate body which is mounted within a flow containing pipe, along a diameter of the pipe. A pair of spaced edges on the exterior of the body break up the fluid flowing over the body causing a low pressure area at the trailing edge of the body. By measuring the difference in pressure of the flowing fluid at the leading and trailing edges, one obtains an indication of the flowrate.

To allow for the different pressures to be sensed at the leading and trailing edges, separate plenum chambers are commonly provided within the body or in close contact with the exterior of the body, the plenums communicating with fluid flows at the leading and trailing edges through holes provided through the wall of the body.

Various body shapes and constructions have been proposed to generate acceptable differences in pressure from a given fluid flow whilst being practical and economical from a manufacturing viewpoint. By way of example, International Patent Application WO 97/48970 illustrates a form of instrument in which the elongate body comprises an outer sleeve deformed about, so as to intimately contact and envelop, two triangular sectioned plenums. The sleeve and plenums are extrusions and require what we believe to be a relatively expensive process to deform the outer sleeve and arrive at the finished product. Further because the outer form of the elongate body is achieved by a deformation process, there is a limit to the sharpness of the flow dividing edges which can be achieved. This, in turn, affects the separation of the flowing fluid from the body and thus affects the linearity of the instrument when in use.

It is an object of this invention to provide a method of forming a differential pressure pitot flowmeter, and a flowmeter formed thereby, which operates effectively yet which does not require specialist or costly equipment to manufacture; or which will at least provide a useful choice.

### Summary of the Invention

Accordingly, in one aspect, the present invention provides a method of forming a differential pressure pitot flowmeter, said method including the steps of forming or selecting an elongate body of substantially uniform cross section, said body having:
(i) flow separation edges defined at spaced points on the cross-section of said body and extending along said body, and
(ii) tube receiving channels provided in the outer surface of said body which channels, when said body is viewed in cross-section, lie on opposite sides of a straight line between said flow separation edges and extend along said body; and
locating and fixing tubes within said tube receiving channels, such that the interior of each of said tubes may, in use, communicate with the medium surrounding said body.

Preferably said elongate body comprises a substantially solid body. The solid body, complete with tube receiving channels, is preferably cold drawn from steel billet. The tubes are preferably of a compatible metal and are preferably welded in the channels. As an alternative, the tubes could be bonded into the channels using one or more suitable adhesives.

Preferably said method further includes forming holes through the walls of said tubes after the tubes have been fixed into the tube receiving channels. At least three, and more preferably four or more holes are preferably formed in the wall of each of said tubes. The holes of one tube are preferably located at the same distances along said body as the holes in the other tube. All holes are preferably aligned at right angles to, and pointing away from, a straight line between said sharp edges.

In a second aspect, the invention provides a differential pressure pitot flowmeter, said flowmeter including an elongate body of substantially uniform cross section, said body having:
(i) flow separation edges defined at spaced points on the cross-section of said body and extending along said body, and
(ii) tube receiving channels provided in the exterior surface of said body which channels, when said body is viewed in cross-section, lie on opposite sides of a straight line between said flow separation edges and extend along said body; and
a tube located within each of said tube receiving channels, the interior of each tube being communicable, in use, with the medium surrounding said body.

The elongate body is preferably a substantially solid body and is conveniently formed from cold drawn steel, preferably cold drawn stainless steel. The tubes are of a compatible steel tube and may be welded into the tube receiving channels in said body or may be bonded in place with one or more suitable adhesives.

At least three, and more preferably four or more holes are provided in the wall of each of said tubes. The holes of one tube are preferably located at the same distances along said body as the holes in the other tube. All holes are preferably aligned at right angles to, and pointing away from, a straight line between said flow separation edges.

Many variations in the way the invention may be performed will present themselves to those skilled in the art, upon reading the following description. The description should not be regarded as limiting but rather as an illustration, only, of one manner of performing the invention. Where appropriate any element or component should be taken as including any or all equivalents thereof whether or not specifically mentioned. The scope of the invention should be determined solely by the appended claims.

### Brief Description of the Drawings

One working embodiment of the invention will now be described with reference to the accompanying drawings in which:
- Figure 1:: shows a cross sectional view through an averaging pressure pitot flowmeter embodying the invention;
- Figure 2:: shows a view along the line II-II in Figure 1; and
- Figure 3:: shows a cross sectional view through a solid body member used in the formation of the apparatus shown in Figures 1 & 2.

### Detailed Description of Working Embodiment

Referring to the drawings, the invention provides a method of forming an averaging pressure pitot flowmeter and a flowmeter 5 formed according to the method.

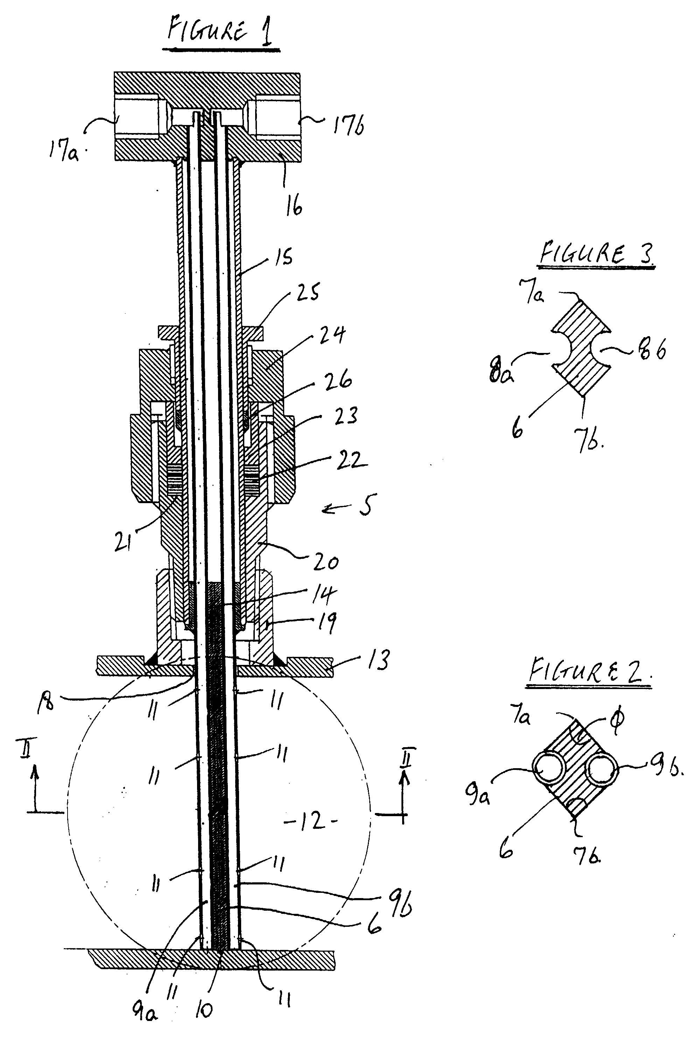

To this end, an elongate body 6 is provided, the body 6 having a substantially constant cross-section as shown in Figures 2 & 3. The body 6 is selected or formed so as to provide or define flow separation edges 7a and 7b extending, at spaced points on the cross-section, along the exterior surface of the body 6. The body 6 is further provided with tube receiving channels 8a and 8b, the channels 8a and 8b being on opposite sides of a straight line joining the edges 7a and 7b and also extending along the body. Tubes 9a and 9b are fitted and fixed into the channels 8a and 8b, the interiors of the tubes being communicable with the medium surrounding the flowmeter, when in use, so as to provide the high and low pressure plenums of the instrument.

The elongate body is preferably a substantially solid body and, as such, may be fabricated from a supply of stock metal section. The stock section may be purpose formed or may, if possible and appropriate, be adapted from a standard, off-the-shelf, metal section. For example, we have found that differential pressures can be generated using a hexagon shaped standard metal bar which uses two opposed apices to provide the flow separation edges 7a and 7b. The channels 8a and 8b are then milled in the flat surfaces located on opposite sides of the selected apices such that the maximum dimension of the channel is set to equal substantially the entire width of the face in which the channel is formed.

Whilst differential pressures can be generated using the hexagon bar example described above, as the basis for the body 6, better results (a greater pressure difference) are achieved if the edges 7a and 7b are located at the ends of faces which are angled further apart than a regular hexagon section provides. Accordingly a purpose designed and formed body is preferred having an included angle ⌀ of 90° between the leading faces as opposed to the 60° angle provided by a regular hexagon. It is to be appreciated, however, that angles both less than, and greater than, 90° may provide perfectly satisfactory levels of performance.

The purpose designed body may conveniently be cold drawn from steel, preferably stainless steel. Other forming options include extrusion, milling and wire erosion. Whatever material or forming process is selected, the channels 8a and 8b are conveniently formed simultaneously with the remainder of the body 6.

It will be appreciated that the materials from which the flowmeter is formed are not critical to the performance of the invention. Materials will generally be selected having regard to strength and chemical compatibility requirements.

The tubes 9a and 9b may be taken from lengths of standard stock tube and then welded or bonded in the channels 8a and 8b. The tubes are sealed at the lower end 10 of the flowmeter.

Each tube is preferably provided with at least three holes 11 in the wall thereof, the positions of holes 11 being symmetrical about the mid-length point of that part of the body which, in use, is exposed to the interior 12 of pipe 13. In the size of instrument shown in Figure 1, four holes 11 are provided in each of tubes 9a and 9b, the holes in tube 9a being at the same axial position along the body 6 as the holes 11 in the tube 9b. For larger instruments, six or eight holes may be provided in each tube.

All holes 11 are aligned perpendicular to, and away from, a straight line joining the edges 7a and 7b.

The holes 11 are preferably formed, by drilling, after the tubes 9a and 9b have been fixed within the channels 8a and 8b although this is not essential and, in some situations, it may be more advantageous to pre-drill the holes 11 before fixing the tubes in position.

The upper end 14 of the body 6 is mounted in a cylindrical outer housing 15 which envelopes tubes 9a and 9b as they extend beyond the body 6 to engage fitting 16. The fitting 16 includes tapped ports 17a and 17b to allow the flowmeter to be connected to pressure transducers (not shown) and an output flow indication device (not shown).

Figure 1 also shows a method of mounting the flowmeter 5 on pipe 13 in a manner which effectively prevents leakage from the pipe, yet which does not impose excessive axial loading on the instrument which might damage the body 6 and/or tubes 9.

In the form shown an exterior part of the pipe 13 is prepared by drilling a hole 18 therein of a diameter sufficient to accommodate, with a little clearance, the body 6 with attached tubes 9a and 9b. An internally threaded mounting boss 19 is then fixed, by for example welding, on to the pipe exterior so as to surround the hole 18.

Packing gland 20, which is a close sliding fit on the outside of housing 15, threadably engages the inner surface of mounting boss 19, the gland having an internal step 21 to locate packing material 22 and provide a compression surface therefor. The packing material 22 is compressed against the step 21, and against the outer surface of housing 15, by compression ring 23 in turn displaced by gland nut 24 which threadably engages an upper exterior surface part of the gland 20. Thus a seal is provided to prevent the egress of fluid, under pressure, from the pipe 13, yet without imposing any axial loading on the flowmeter components.

In order to retain the flowmeter in position, with end 10 in engagement with the opposite inner wall of pipe 13, a locking sleeve 25 is provided which screws into gland nut 24 and abuts collar 26 fixed to the outer surface of housing 15.

In the known manner, the flowmeter 5 is positioned in pipe 13 so that the tubes 9a and 9b are aligned in the flow direction and a straight line joining the edges 7a and 7b is perpendicular to the flow direction. The flowmeter is further mounted, on a diameter of the pipe 13, so that the lower end 10 abuts against the inner wall of the pipe. In some applications, particularly those involving instruments and pipe diameters of larger sizes, the inner wall of the pipe, opposite to hole 18, may be provided with some additional means to receive, retain and positively support the end 10 of the flowmeter.

With the flowmeter in position, the packing material 21 is compressed and the locking sleeve screwed into position.

Thereafter the flowmeter functions in the known manner.

It will thus be appreciated that the present invention provides a relatively simple yet effective means of providing an averaging pressure pitot flowmeter. The flowmeter according to the invention, at least in the case of the operating embodiment described herein, lends itself particularly to efficient cell manufacture where body, tubes and housing components can be cut from stocks of component material, assembled into a jig and finished into an effective operating instrument.

## Claims

1. A method of forming a differential pressure pitot flowmeter, said method including the steps of forming or selecting an elongate body of substantially uniform cross section, said body having:
(i) flow separation edges defined at spaced points on the cross-section of said body and extending along said body, and
(ii) tube receiving channels provided in the outer surface of said body which channels, when said body is viewed in cross-section, lie on opposite sides of a straight line between said flow separation edges and extend along said body; and
locating and fixing tubes within said tube receiving channels, such that the interior of each of said tubes may, in use, communicate with the medium surrounding said body.

2. A method as claimed in claim 1 wherein said body, complete with tube receiving channels, is cold drawn from a steel material.

3. A method as claimed in claim 2 or claim 2 wherein said tubes are of a metal compatible with said body, said method further including welding said tubes in said channels.

4. A method as claimed in claim 1 or claim 2 including bonding said tubes into said channels using one or more suitable adhesives.

5. A method as claimed in any one of claims 1 to 4 including forming holes through the walls of said tubes after the tubes have been fixed into the tube receiving channels.

6. A method as claimed in claim 5 including forming at least three holes in the wall of each of said tubes.

7. A method as claimed in claim 5 or claim 6 including forming the holes in each of said tubes at the same axial distances along said body.

8. A method of forming a differential pressure pitot flowmeter substantially as herein described with reference to the accompanying drawings.

9. A differential pressure pitot flowmeter, said flowmeter including an elongate body of substantially uniform cross section, said body having:
(i) flow separation edges defined at spaced points on the cross-section of said body and extending along said body, and
(ii) tube receiving channels provided in the exterior surface of said body which channels, when said body is viewed in cross-section, lie on opposite sides of a straight line between said flow separation edges and extend along said body; and
a tube located within each of said tube receiving channels, the interior of each tube being communicable, in use, with the medium surrounding said body.

10. A flowmeter as claimed in claim 9 wherein said elongate body is a substantially solid body.

11. A flowmeter as claimed in claim 9 or claim 10 wherein said elongate body is formed from cold drawn steel, said tubes being of a compatible steel tube.

12. A flowmeter as claimed in any of claims 9 to 11 wherein said tubes are welded into said tube receiving channels.

13. A flowmeter as claimed in any of claims 9 to 11 wherein said tubes are bonded in said channels using one or more suitable adhesives.

14. A flowmeter as claimed in any one of claims 9 to 13 wherein each of said tubes has at least three holes provided in the wall thereof.

15. A flowmeter as claimed in claim 14 wherein the holes of both tubes are located at the same axial distances along said body.

16. A flowmeter as claimed in claim 14 or claim 15 wherein said holes are aligned at right angles to, and pointing away from, a straight line between said flow separation edges.

17. A flowmeter substantially as hereinbefore described with reference to, and as illustrated in, the accompanying drawings.

18. A flowmeter when formed in accordance with the method as claimed in any one of claims 1 to 8.
